# EUROPEAN PATENT SPECIFICATION

(11) **EP 2 660 496 B1**
(45) Date of publication and mention of the grant of the patent: **27.02.2019**
(21) Application number: 13165788.4
(22) Date of filing: 29.04.2013
(51) Int. Cl.: F16K 27/02

(54) **Valve**
Ventil
Vanne

(30) Priority: 02.05.2012 IT MI20120172 U
(43) Date of publication of application: 06.11.2013
(73) Proprietor: Far Rubinetterie S.P.A., 28024 Gozzano (NO) (IT)
(72) Inventor: ALLESINA, Guerrino, 28020 Gozzano (IT)
(74) Representative: Candito, Rocco

(56) References cited:
- WO-A1-2006/010880
- DE-A1- 19 859 697
- DE-U1- 9 201 362
- FR-A1- 2 486 194
- GB-A- 851 791
- US-A- 5 083 589

## Description

The first invention relates to a valve unit that is suitable for being fitted in a heating circuit for buildings, in particular a single/double-pipe valve provided, or providable, with a thermostatic control or with a thermoelectric head.

It is known that in many civil or industrial buildings, in particular those that have not been built recently, heating plants are currently in use of the so-called "single-pipe" type, i.e. circuits consisting of a single pipe from which the derivations lead off to the various heating bodies, such as radiators, to be supplied with hot water. This piping is connected to a manifold or directly to a heating riser.

The piping thus comprises a delivery portion that serially connects two or more radiators and a return portion. Each radiator is connected to the delivery portion, or delivery pipe, by a respective valve of totally manual type.

The aforesaid known valve comprises a valve body from which a first connection portion and a second connection portion project integrally by means of which connection is possible respectively to a first outlet and a second outlet protruding from the delivery pipe, and a third connection portion that enables connection of the valve to the respective radiator. The first connection portion and the second connection portion extend respectively along a first axis and a second axis that are mutually parallel and separated by a distance, or gap, having a preset value. The first connection portion and the second connection portion are thus in a fixed position with respect to the valve body and are mutually separated by a distance or preset and invariable gap.

By means of the third connection portion, the valve enables the water to enter and exit the respective radiator in a coaxial manner via a suitable metal probe, pipe female union and nut, along a third axis that is arranged orthogonally to the aforesaid first and second axes.

In the last few years, above all through the energy retrofit of buildings, demand has increased for valves that are provided with a thermostatic control or can be provided with thermostatic heads, that are able to adjust the flow of hot water automatically, also owing to the fact that current laws provide tax incentives and/or detractions for the costs incurred in modernising plants.
Nevertheless, it is very difficult, or even impossible, to replace in the old plants the old totally manual valves with the valves that are currently available that, unlike the aforesaid old valves, are provided with, or are set up to accept, a thermostatic control or a thermoelectric head. The difficulties are encountered if the valve has to be connected to the first outlet and to the second outlet that protrude from the delivery pipe and have a gap, i.e. a distance between the respective axes having a value that is often not conforming to current standards and/or is no longer compatible with the geometries of the valves that can be fitted with thermostats that are currently available on the market.

Document FR 2 486 194 discloses a valve unit for a heating circuit. One object of the invention is to improve known valves for heating circuits by providing a technical solution that enables the aforesaid drawbacks to be overcome.
Another object is to provide a valve unit, or valve of the type comprising, or equipable with, a thermostatic control or a thermoelectric head, that is very versatile and easy to install and use, adapting to many different possible geometrical configurations of a heating plant.
The above is made possible by a valve unit according to what is defined in claim 1. Owing to the valve unit according to the invention, all the drawbacks inherent to the known valves disclosed above are overcome.
The features and advantages of the valve unit will be clear from the claims, from the description that follows, and from the attached drawings, which illustrate an embodiment thereof by way of non-limiting example, in which:
Figures 1 to 3 show a first embodiment of the valve unit according to the invention respectively in three different possible installation configurations;
Figure 4 is a longitudinal section of the valve unit in the configuration in Figure 1;
Figure 4a shows an enlarged detail of Figure 4, in which movable coupling means of the valve unit is more visible in a configuration;
Figure 5 is a longitudinal section of the valve unit in the configuration in Figure 3;
Figure 5a shows an enlarged detail of Figure 5, in which the movable coupling means of the valve unit is more clearly visible in another possible configuration;
Figure 6 is an exploded view of the valve unit in Figure 1;
Figure 7 shows a second embodiment of the valve unit according to the invention;
Figure 8 is an exploded view of the valve unit in Figure 7,
Figures 9 and 10 show a third embodiment of a valve unit, provided with bypass screw means and respectively comprising thermostatic control means and possibly thermoelectric head means;
Figure 11 is an exploded view of the third valve unit embodiment;
Figures 12 and 13 show a fourth embodiment of the valve unit, provided respectively with thermostatic control means and possibly thermoelectric head means;
Figure 14 is another view of the valve unit in Figure 12.

With reference to the enclosed figures, a valve unit 1 is shown, in particular a valve 1 that is suitable for being installed in a heating circuit for buildings, and is in particular suitable for circuits of the so-called single-pipe type. The valve 1 is more precisely a valve 1 with an adjustable centres distance that adapts to numerous possible circuit geometries, in particular of the single-pipe type. Nevertheless, in certain embodiments, the valve unit 1 is also configurable for being fitted in plants of the so-called two-pipe type, i.e. in plants provided with two distinct circuits, one for the delivery and the other for the return of the thermal fluid.

The valve unit 1, as will be disclosed below, is provided, or can be provided, with a suitable thermostatic control or with a thermoelectric head.

The valve 1, or valve unit 1, comprises a valve body 2 in which plug means 3 is housed for controlling the flow of a thermal fluid that circulates in the heating circuit, in particular for adjusting the passage of the thermal fluid to a heating body, such as a radiator, of the heating circuit.

The plug means 3 comprises a control rod 4 - which is movable along an operating direction A, and cooperates with a contrasting spring - to a lower end of which a plug 5 is connected with which the flowrate of thermal fluid to the radiator is varied.

The plug means 3 is configured not only for being able to be driven manually by a suitable knob 8 and respective sleeve or support 7, but also for being able to be driven by a thermostatic head or by a thermoelectric head so as to automate the thermal setting inside a building and thus optimise the energy consumption thereof. After removing the support 7 and the knob 8 from the valve 1, it is possible to fit a thermostatic or thermoelectric control on the valve 1.

On the valve unit 1 a control or thermostatic head can thus be fitted, i.e. of the type comprising a thermostatic bulb that expands or contracts according to the temperature of the room, moving the control rod 4 accordingly to a position that is such as to determine the passage of a suitable flowrate of thermal fluid to the radiator. With the thermostatic control it is not therefore necessary to provide any electric supply to the valve unit 1.

The electrothermal head, which is on the other hand supplied electrically, regulates the flowrate of the thermal fluid automatically on the basis of an electric signal that is sent to the electrothermal head by a thermostat located in the environment to be controlled by thermostat or is sent by a control unit. The thermostatic bulb is heated electrically in a manner that varies according to the electric signal received, thus determining a suitable closing/opening position of the valve unit 1. The valve unit 1 is provided with a suitable adapter for fitting the thermoelectric head.

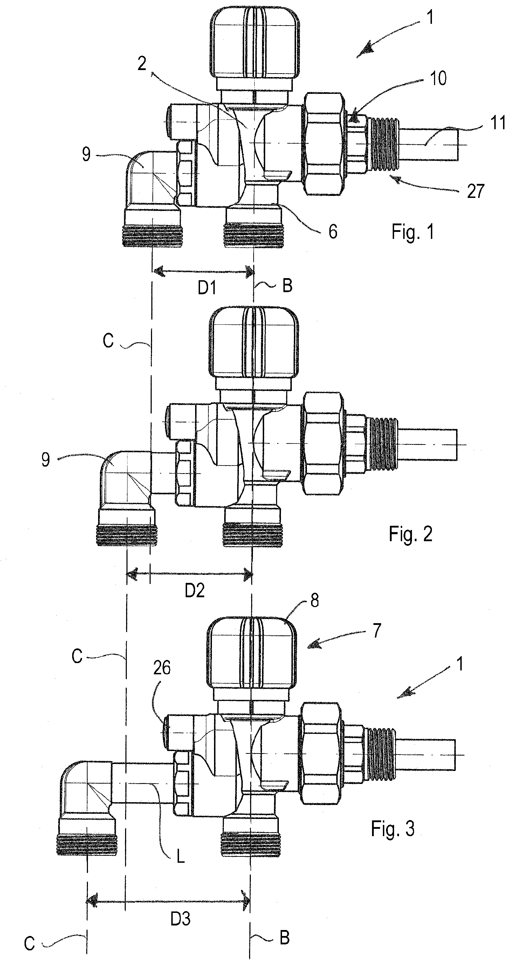

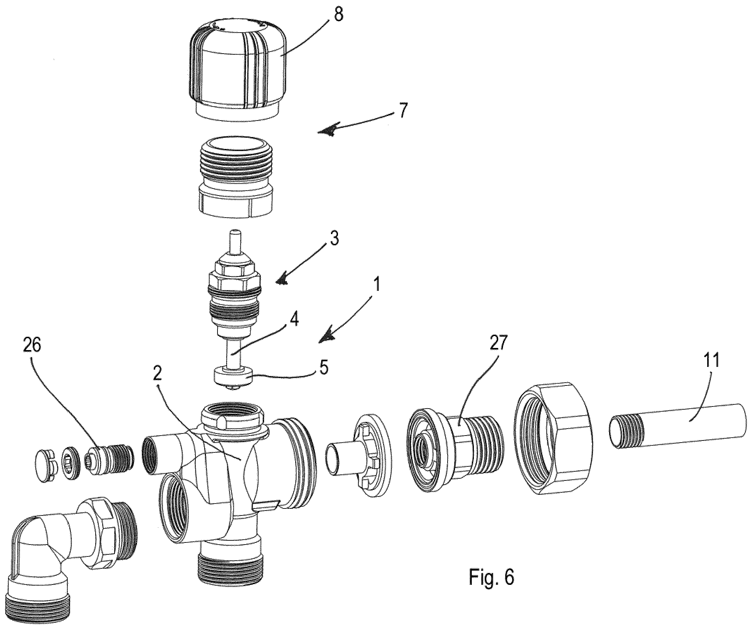

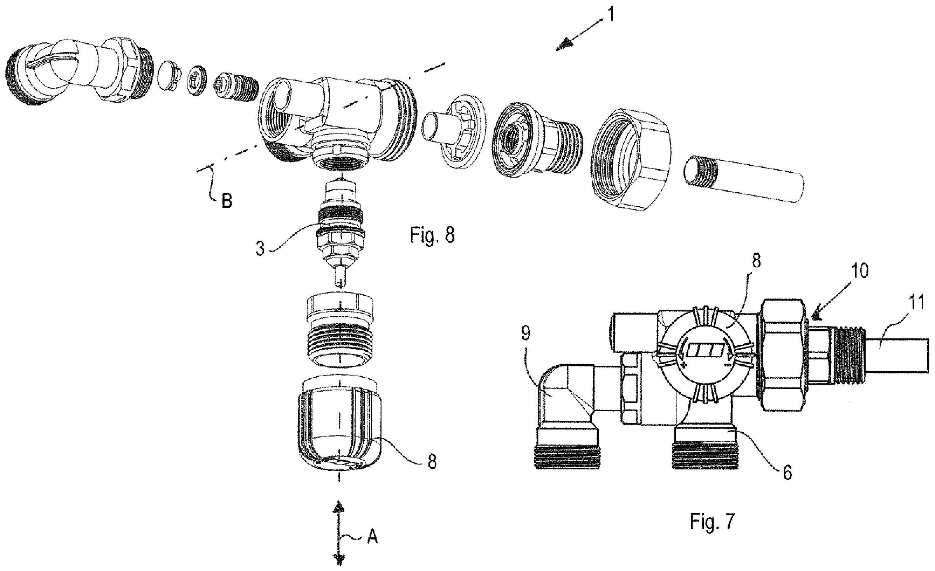

On the valve body 2 a first connection portion 6 is provided that enables the valve unit 1 to be connected to a first outlet of the delivery pipe of the heating circuit. In particular, the first connection portion 6 projects integrally from the valve body 2 along a first axis B that, in an embodiment shown in Figures 1 to 6, is parallel to, in particular aligned on, the operating direction A. In another possible valve unit embodiment 1, shown in Figures 7 and 8, the plug means 3 is arranged for operating according to an operating direction A which is transverse, in particular substantially orthogonal, to the aforesaid first axis B.

The valve unit 1 comprises a second connection portion 9, disclosed in detail further on, which enables the heating circuit to be connected to a second outlet of the delivery pipe.

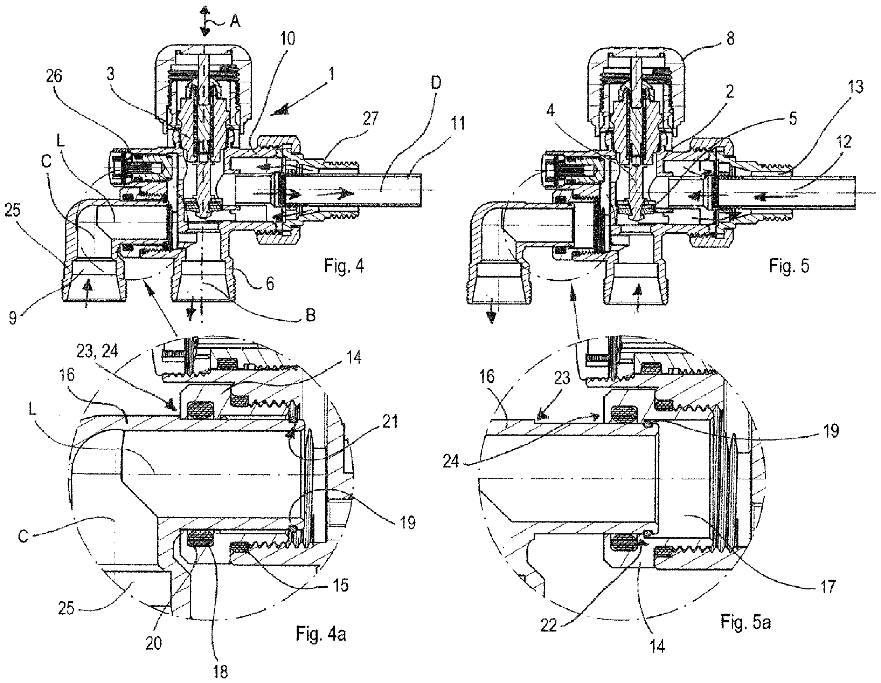

The valve unit 1 comprises a third connection portion 10 that is connectable to the radiator to be supplied with the thermal fluid, and houses a flow separator. The third connection portion 10 is connected to the radiator via a metal probe 11 and a pipe union 27 fixed with a nut, which enable the thermal fluid to enter and exit the radiator. In particular, a more interior conduit 12 and a more exterior conduit 13 are defined that are coaxial to one another that can be used indistinctly, according to specific fitting needs, for fluid to enter and exit the radiator. For example, the thermal fluid that reaches inside the valve body 2 from the delivery pipe can flow towards the radiator through the more interior conduit 12, i.e. internally along the probe 11, and return to the valve body 2 through the more external conduit 13, as shown in Figure 4, or in opposite mode as shown in Figure 5. Owing to the versatility and interchangeability of the valve unit 1, the thermal fluid coming from the delivery pipe can enter the valve body 2 through the second connection portion 9 and exit through the first connection portion 6, as shown in Figure 4, or in the opposite manner, as shown in Figure 5.

In the valve unit 1, coupling means is provided by means of which the second connection portion 9 is movably connected to the valve body 2. The movable coupling means is configured in such a manner as to enable the corresponding position of the second connection portion 9 to be varied with respect to the first connection portion 6, in particular of the reciprocal distance or centres distance, to adapt to different installation configurations. It is owing to this configuration that the valve unit 1 is definable as a valve 1 with an adjustable centres distance.

In other words, the valve unit 1, owing to the movable coupling means, adapts to various possible distances between the first outlet and the second outlet of the pipe and also to different reciprocal orientations of the latter, i.e. to a situation in which the first outlet is oriented along an axis that is tilted with respect to the axis of the second outlet. The movable coupling means comprises a first coupling portion 14 connected to the valve body 2 in a stationary position, in particular screwed on the latter with an interposed seal washer 15 of "O-ring" type, and a second coupling portion 16 obtained on the second connection portion 9 and configured for coupling in a movable manner with the first connection portion 6.

The second coupling portion 16 is slidable along, and rotatable around, a longitudinal axis L - transverse to the first axis B - of the first coupling portion 14, such as to enable a distance and angular position of the second connection portion 9 to be set with respect to the first connection portion 6.

In particular, the longitudinal axis L is orthogonal to the first axis B.

The first coupling portion comprises a receiving portion 14, inside which a chamber 17 is defined, and the second coupling portion comprises an inserting portion 16 configured for being received slidably and rotatably in the aforesaid chamber 17 of the receiving portion 14.

The movable coupling means comprises sealing means, such as a sealing ring 18 of "O-ring" type interposed between the inserting portion 16 and the receiving portion 14 to prevent leaks of fluid from the valve unit 1. The sealing ring 18 is housed in a first annular seat 20 obtained on an internal surface of the receiving portion 14.

The presence of the two sealing rings 15 and 18 prevents any loss of thermal fluid, such as water, from the valve unit 1.

In the movable coupling means retaining means is also included, such as a retaining ring 19 of "Seeger" type, arranged for preventing the inserting portion 16 separating from the receiving portion 14. The retaining ring 19 is housed in a second annular seat 21 obtained around an end of the inserting portion 16.

On the receiving portion 14, in an internal surface, a relief zone 22 is provided that is shaped for restingly receiving the retaining ring 19 when the inserting portion 16 is in a configuration of maximum projection from the receiving portion 14, as shown in Figure 3 and Figure 5a. In this maximum projection configuration, the second connection portion 9 is at a maximum distance D3 from the first connection portion 6.

On the inserting portion 16 a further relief zone 23 is obtained that is shaped for abutting on a resting surface 24 of the receiving portion 14 when the inserting portion 16 is in a minimum projection configuration with respect to the receiving portion 14, as shown in Figures 1 and 4a. In this minimum projection configuration, the second connection portion 9 is at a minimum distance D1 from the first connection portion 6.

The second connection portion 9 is configured as an elbow shape, and comprises an end part 25 - for connecting to the second outlet of the piping - which extends along a second axis C arranged transversely, and in particular orthogonally, to the longitudinal axis L. In other words, the second connection portion 9 is configured as a movable curve portion.

In Figures 1 to 3, three possible operating configurations of the valve unit 1 are shown, to adapt to three possible geometrical configurations of heating circuit.

More precisely, in Figure 1 the valve unit 1 is in a minimum distance D1 configuration between the first axis B and the second axis C, thus in a configuration with a minimum centres distance value between the first connection portion 6 and the second connection portion 9, in particular the end part 25 of the latter.

In Figure 2 the valve unit 1 is in an intermediate distance D2 configuration between the first axis B and the second axis C, thus in a configuration with an intermediate gap value between the first connection portion 6 and the end part 25.

In Figure 3, the valve unit 1 is in a maximum distance configuration D3 between the first axis B and the second axis C, thus in a configuration with a maximum centres distance value between the first connection portion 6 and the end part 25.

The valve unit 1 is further provided with balancing means 26, or lockshield means that can be adjusted to balance the heating circuit. In particular, the balancing means 26, by acting as bypass means, for example screw-type means, induces a part of the fluid coming from the delivery pipe of the circuit, which enters the valve body 2, to flow directly to the next radiator without entering the radiator connected directly to the valve unit 1.

Owing to the particular structural configuration of the valve unit 1, in particular owing to the movable coupling means, it is possible to install the valve unit 1 in outdated single-pipe heating circuits, which have any distance value between the two fitting outlets. In particular, the valve unit 1 adapts to gap values that are not compatible with the valves that are currently available on the market.

Owing to the valve unit 1 modernising old plants is significantly facilitated and is made cheaper.

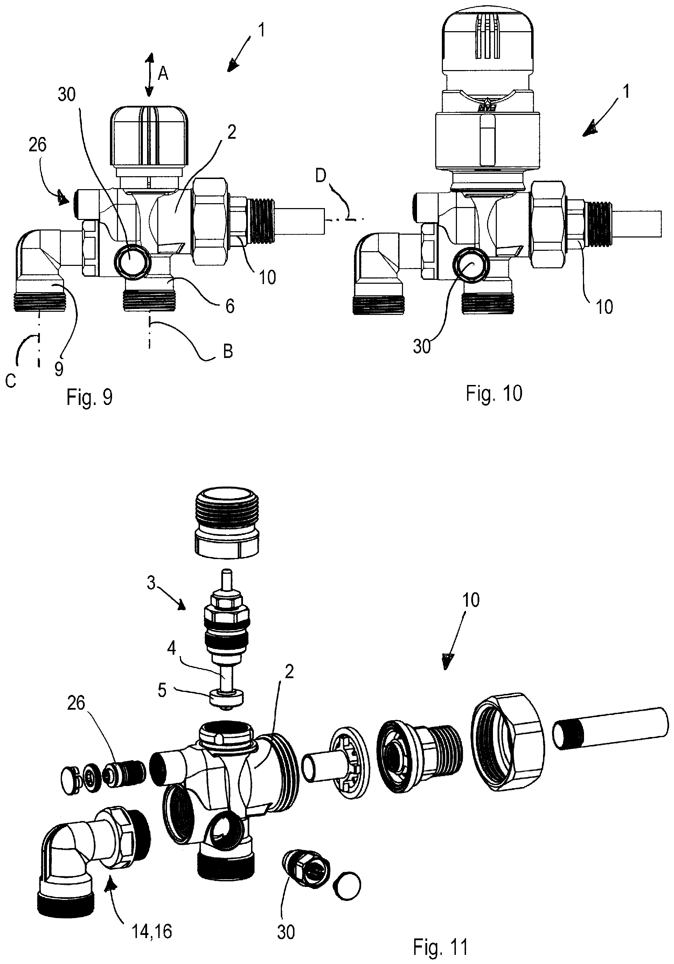

In the embodiments shown in the Figures by way of non-limiting example, the third connection portion 10 extends along a third axis D that is orthogonal to the first axis B. Nevertheless, the third connection portion 10 can be configured differently, depending on specific uses or particular fitting configurations. The first axis B and the aforesaid longitudinal axis L define a common lying plane. The third connection portion 10, in the embodiments shown in Figures 1 to 11, is positioned in such a way that the third axis D is parallel to, in particular lies on this common lying plane, the third axis D being transverse, in particular orthogonal, to the first axis B.

In a further possible embodiment (not shown), the third connection portion 10 can be configured in such a manner that the third axis D extends parallel to the first axis B.

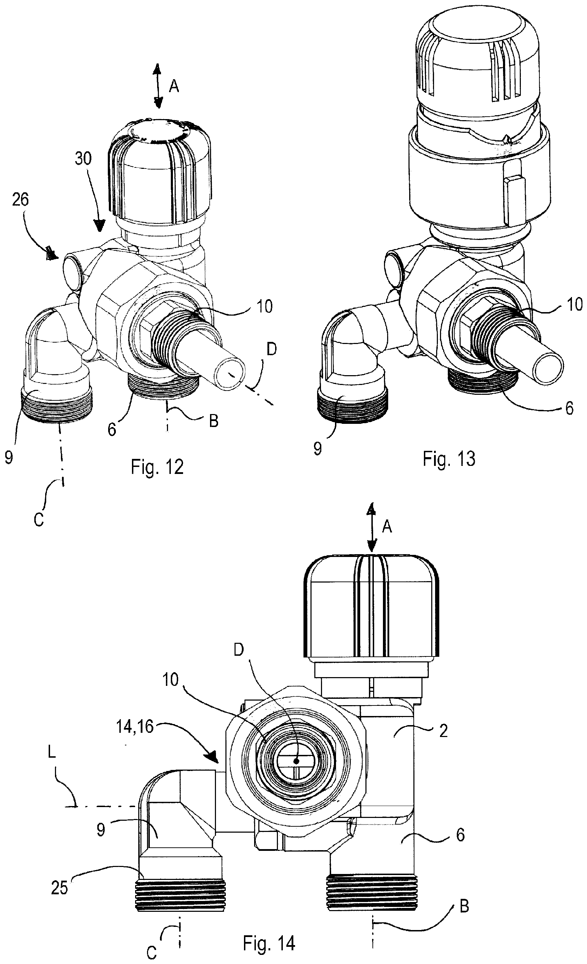

Other embodiments are provided, such as, for example, shown in Figures 12 to 14, in which the third connection portion 10 is positioned in such a manner that the third axis D is transverse, in particular orthogonal, to the aforesaid common lying plane defined by the first axis B and by the longitudinal axis L. In the embodiments in Figures 12 to 14, the plug means 3 is arranged for operating according to an operating direction A which is parallel, in particular aligned on the first axis B. Nevertheless, it is possible to provide other particular arrangements for the plug means 3; for example, the plug means 3 can be arranged for operating according to an operating direction A that is transverse, in particular substantially orthogonal, to the aforesaid first axis B.

Each of the previously disclosed embodiments of valve unit 1 can also be provided with bypass screw means 30 configured for enabling the valve unit 1 to be used in more recent plants, of two-pipe type, i.e. plants provided with two distinct circuits, one for delivery and one for return of the thermal fluid. This is possible owing to the fact that the bypass screw means excludes the direct connection of fluid between the first connection portion 6 and the second connection portion 9. With this configuration, the first connection portion 6 (or equivalently the second connection portion 9) receives the hotter entering thermal fluid to be entirely directed to the heating body and only after traversing the heating body does the thermal fluid flow through the second connection portion 9 (or the first connection portion 6) to return to the boiler. In other words, in this configuration, no direct movement of fluid from the first 6 to the second 9 connection portion or vice versa occurs, the flows of thermal fluid being kept separate.

Further possible variants and/or additions to what has been disclosed and illustrated in the attached drawings are possible. For example, in an alternative solution of the movable coupling means, the first coupling portion and the second coupling portion can be configured for coupling in an inverted manner, i.e. with the second coupling portion internally receiving the first coupling portion.

Various elements can be replaced by further technically equivalent elements without thereby falling outside the scope of the invention.

It is possible to configure and size the valve unit in the desired manner in function of the particular application for which it is intended. In a non-limiting embodiment, the valve unit 1 is configured for adapting to gaps that vary between 30 mm and 70 mm, in particular between 40 mm and 65 mm. For example, other gap distances include values comprised between 40 mm and 50 mm and between 48 mm and 65 mm. Nevertheless, the valve unit 1 can be configured to adapt to centres distance values that are also different from those indicated.

Lastly, the materials used for the construction of the valve unit 1 can be chosen to suit needs provided that they are suitable for the specific use for which they are intended.

## Claims

1. Valve unit for a heating circuit, comprising:
- a valve body (2) housing plug means (3, 4, 5) for varying the flow of a thermal fluid,
- said plug means (3, 4, 5) being movable along an operating direction (A) and being configured for being driven by thermostatic control means or by thermoelectric head means;
- a first connection portion (6) and a second connection portion (9) connected to said valve body (2) respectively for connection to a first outlet and a second outlet of said hydraulic circuit to enable said thermal fluid to enter and exit said valve body (2),
- a third connection portion (10) suitable for enabling connection to, and the passage of said thermal fluid along, a heating body of said heating circuit;
- said first connection portion (6) extending along a first axis (B) lying on a plane also containing said operating direction (A);
further comprising movable coupling means (14, 16) by means of which said second connection portion (9) is connected to said valve body (2), said movable coupling means (14, 16) being configured to enable the relative position of said second connection portion (9) to be varied with respect to said first connection portion (6) to adapt to different installation configurations in which said first outlet and said second outlet have any reciprocal distance and reciprocal orientation, wherein said movable coupling means (14, 16) comprises a first coupling portion (14) connected to said valve body (2) in a stationary position, and a second coupling portion (16) obtained on said second connection portion (9) and configured for coupling in a movable manner with said first coupling portion (14), wherein said movable coupling means (14, 16) comprises sealing means (18) interposed between said first coupling portion (14) and said second coupling portion (16) and retaining means (19) arranged for preventing separating of said second coupling portion (16) from said first coupling portion (14), wherein said first coupling portion comprises a receiving portion (14) defining a chamber (17) and connected in a stationary position to said valve body (2), and said second coupling portion comprises an inserting portion (16) obtained on said second connection portion (9) and configured for being slidably and rotatably received in said chamber (17) of said receiving portion (14), and wherein on the receiving portion (14), in an internal surface, a relief zone (22) is provided that is shaped for restingly receiving the retaining means (19) when the inserting portion (16) is in configuration of maximum projection from the receiving portion (14).

2. Valve unit according to claim 1, wherein said second coupling portion (16) is slidable along, and rotatable around, a longitudinal axis (L) - transverse to said first axis (B) - of said first coupling portion (14), so as to enable a distance and angular position of said second connection portion (9) to be adjusted with respect to said first connection portion (6).

3. Valve unit according to claim 1 or 2, wherein said sealing means comprises a sealing ring (18) of the "O-ring" type housed in a first annular seat (20) obtained inside said receiving portion (14), and said retaining means comprises a retaining ring (19) of the "Seeger" type housed in a second annular seat (21) obtained around an end of said inserting portion (16), said relief zone (22) being shaped for supportingly receiving said retaining ring (19) in the maximum projection configuration (D3) of said second connection portion (9) from said first connection portion (6).

4. Valve unit according to claim 3, wherein on said inserting portion (16) a further relief zone (23) is obtained that is shaped for abutting on a resting surface (24) of said receiving portion (14) in a minimum distance configuration (D1) of said second connection portion (9) with respect to said first connection portion (6).

5. Valve unit according to any one of the preceding claims, wherein said first connection portion (6) projects integrally from said valve body (2), and wherein said second connection portion (9) is configured as an elbow shape and comprises an end part (25) - for connecting to said second outlet - extending along a second axis (C) arranged transversely to said longitudinal axis (L).

6. Valve unit according to claim 5, wherein said end part (25) extends at right angle to said second coupling portion (26), said movable coupling means (14, 16) enabling a centres distance to be adjusted between said first connection portion (6) and said second connection portion (9).

7. Valve unit according to any preceding claim, further comprising balancing means (26) for balancing the flow of said thermal fluid in said heating circuit.

8. Valve unit according to any preceding claim, further comprising bypass screw means (30) configured for enabling said valve unit (1) to be used in two-pipe plants comprising separate delivery and return circuits.

9. Valve unit according to any preceding claim, wherein said third connection portion (10) is shaped for enabling connection to said heating body by a probe (11) and pipe union (27), and extends along a third axis (D) arranged transversely to said first axis (B) of said first connection portion (6).

10. Valve unit according to claim 9 as appended to claim 2 or to any one of claims 3 to 8, as appended to claim 2, wherein said first axis (B) and said longitudinal axis (L) define a common lying plane, and wherein said third connection portion (10) is positioned in such a way that the connection to said heating body is such that said third axis (D) is parallel to said common lying plane.

11. Valve unit according to claim 9 as appended to claim 2 or to any one of claims 3 to 8, as appended to claim 2, wherein said first axis (B) and said longitudinal axis (L) define a common lying plane, and wherein said third connection portion (10) is positioned in such a way that the connection to said heating body is such that said third axis (D) is orthogonal to said common lying plane.

12. Valve unit according to any preceding claim, wherein said plug means (3, 4, 5) is arranged in such a manner that said operating direction (A), according to which said plug means (3, 4, 5) moves, is parallel to, in particular aligned on, said first axis (B).

13. Valve unit according to any one of claims 1 to 11, wherein said plug means (3, 4, 5) is arranged in such a manner that said operating direction (A), according to which said plug means (3, 4, 5) moves, is transverse, in particular orthogonal, to said first axis (B).

14. Valve unit according to any preceding claim, and further comprising thermostatic control means and/or thermoelectric head means connected operationally to said plug means (3, 4, 5).

## Patentansprüche

1. Ventileinheit für einen Heizkreis, umfassend:
- einen Ventilkörper (2), der Verschlussmittel (3, 4, 5) zum Variieren des Durchflusses eines thermischen Fluides aufnimmt,
- wobei die Verschlussmittel (3, 4, 5) entlang einer Betriebsrichtung (A) beweglich sind und konfiguriert sind, um von thermostatischen Steuermitteln oder von thermoelektrischen Kopfmitteln angetrieben zu werden;
- einen ersten Verbindungsabschnitt (6) und einen zweiten Verbindungsabschnitt (9), die mit dem Ventilkörper (2) verbunden sind, jeweils zur Verbindung mit einem ersten Auslass und einem zweiten Auslass des Hydraulikkreises, um es dem thermischen Fluid zu ermöglichen, in den Ventilkörper (2) einzudringen und aus diesem auszutreten,
- einen dritten Verbindungsabschnitt (10), der geeignet ist zum Ermöglichen einer Verbindung mit und zum Durchgang des thermischen Fluides entlang eines Heizkörpers des Heizkreises;
- wobei sich der erste Verbindungsabschnitt (6) entlang einer ersten Achse (B) erstreckt, die auf einer Ebene liegt, die auch die Betriebsrichtung (A) enthält;
weiter umfassend bewegliche Kupplungsmittel (14, 16), durch die der zweite Verbindungsabschnitt (9) mit dem Ventilkörper (2) verbunden ist, wobei die beweglichen Kupplungsmittel (14, 16) konfiguriert sind, um zu ermöglichen, dass die relative Position des zweiten Verbindungsabschnitts (9) in Bezug auf den ersten Verbindungsabschnitt (6) variiert wird, um sich an verschiedene Installationskonfigurationen anzupassen, in denen der erste Auslass und der zweite Auslass einen beliebigen reziproken Abstand und reziproke Orientierung aufweisen, wobei die beweglichen Kupplungsmittel (14, 16) einen ersten Kupplungsabschnitt (14), der mit dem Ventilkörper (2) in einer stationären Position verbunden ist, und einen zweiten Kupplungsabschnitt (16) umfassen, der an dem zweiten Verbindungsabschnitt (9) erhalten und zum Kuppeln in einer beweglichen Weise mit dem ersten Kupplungsabschnitt (14) konfiguriert ist, wobei die beweglichen Kupplungsmittel (14, 16) Dichtungsmittel (18), die zwischen dem ersten Kupplungsabschnitt (14) und dem zweiten Kupplungsabschnitt (16) eingefügt sind, und Haltemittel (19) umfassen, die zum Verhindern des Trennens des zweiten Kupplungsabschnitts (16) von dem ersten Kupplungsabschnitt (14) angeordnet sind, wobei der erste Kupplungsabschnitt einen Aufnahmeabschnitt (14) umfasst, der eine Kammer (17) definiert und in einer stationären Position mit dem Ventilkörper (2) verbunden ist, und der zweite Kupplungsabschnitt einen Einfügeabschnitt (16) umfasst, der an dem zweiten Verbindungsabschnitt (9) erhalten und konfiguriert ist, um in der Kammer (17) des Aufnahmeabschnitts (14) verschiebbar und drehbar aufgenommen zu werden, und wobei an dem Aufnahmeabschnitt (14) in einer Innenfläche eine Entlastungszone (22) vorgesehen ist, die zur ruhenden Aufnahme der Haltemittel (19) geformt ist, wenn sich der Einfügeabschnitt (16) in einer Konfiguration des maximalen Vorsprungs von dem Aufnahmeabschnitt (14) befindet.

2. Ventileinheit nach Anspruch 1, wobei der zweite Kupplungsabschnitt (16) verschiebbar entlang und drehbar um eine Längsachse (L) - quer zu der ersten Achse (B) - des ersten Kupplungsabschnitts (14) ist, um zu ermöglichen, dass ein Abstand und eine Winkelposition des zweiten Verbindungsabschnitts (9) in Bezug auf den ersten Verbindungsabschnitt (6) eingestellt werden kann.

3. Ventileinheit nach Anspruch 1 oder 2, wobei die Dichtungsmittel einen Dichtungsring (18) vom "O-Ring"-Typ umfassen, der in einem ersten ringförmigen Sitz (20) aufgenommen ist, der innerhalb des Aufnahmeabschnitts (14) erhalten wird, und die Haltemittel einen Haltering (19) vom "Seeger"-Typ umfassen, der in einem zweiten ringförmigen Sitz (21) aufgenommen ist, der um ein Ende des Einfügeabschnitts (16) herum erhalten wird, wobei die Entlastungszone (22) zur tragenden Aufnahme des Halterings (19) in der maximalen Vorsprungskonfiguration (D3) des zweiten Verbindungsabschnitts (9) von dem ersten Verbindungsabschnitt (6) geformt ist.

4. Ventileinheit nach Anspruch 3, wobei an dem Einfügeabschnitt (16) eine weitere Entlastungszone (23) erhalten wird, die geformt ist, um auf einer Auflagefläche (24) des Aufnahmeabschnitts (14) in einer minimalen Abstandskonfiguration (D1) des zweiten Verbindungsabschnitts (9) in Bezug auf den ersten Verbindungsabschnitt (6) aufzuliegen.

5. Ventileinheit nach einem der vorstehenden Ansprüche, wobei der erste Verbindungsabschnitt (6) integral aus dem Ventilkörper (2) herausragt und wobei der zweite Verbindungsabschnitt (9) als Krümmerform konfiguriert ist und einen Endabschnitt (25) - zum Verbinden mit dem zweiten Auslass - umfasst, der sich entlang einer zweiten Achse (C) erstreckt, die quer zu der Längsachse (L) angeordnet ist.

6. Ventileinheit nach Anspruch 5, wobei sich der Endabschnitt (25) im rechten Winkel zu dem zweiten Kupplungsabschnitt (26) erstreckt, wobei die beweglichen Kupplungsmittel (14, 16) ermöglichen, dass ein Mittenabstand zwischen dem ersten Verbindungsabschnitt (6) und dem zweiten Verbindungsabschnitt (9) eingestellt wird.

7. Ventileinheit nach einem vorstehenden Anspruch, weiter umfassend Ausgleichsmittel (26) zum Ausgleichen des Durchflusses des thermischen Fluides in dem Heizkreis.

8. Ventileinheit nach einem vorstehenden Anspruch, weiter umfassend Bypass-Schraubenmittel (30), die konfiguriert sind, um zu ermöglichen, dass die Ventileinheit (1) in Zweirohranlagen, die getrennte Vor- und Rücklaufkreise umfassen, verwendet wird.

9. Ventileinheit nach einem vorstehenden Anspruch, wobei der dritte Verbindungsabschnitt (10) geformt ist, um eine Verbindung mit dem Heizkörper durch eine Sonde (11) und Rohrverbindung (27) zu ermöglichen, und sich entlang einer dritten Achse (D) erstreckt, die quer zu der ersten Achse (B) des ersten Verbindungsabschnitts (6) angeordnet ist.

10. Ventileinheit nach Anspruch 9, wenn auf Anspruch 2 rückbezogen, oder nach einem der Ansprüche 3 bis 8, wenn auf Anspruch 2 rückbezogen, wobei die erste Achse (B) und die Längsachse (L) eine gemeinsame Liegeebene definieren und wobei der dritte Verbindungsabschnitt (10) so positioniert ist, dass die Verbindung mit dem Heizkörper so ist, dass die dritte Achse (D) parallel zu der gemeinsamen Liegeebene ist.

11. Ventileinheit nach Anspruch 9, wenn auf Anspruch 2 rückbezogen, oder nach einem der Ansprüche 3 bis 8, wenn auf Anspruch 2 rückbezogen, wobei die erste Achse (B) und die Längsachse (L) eine gemeinsame Liegeebene definieren und wobei der dritte Verbindungsabschnitt (10) so positioniert ist, dass die Verbindung mit dem Heizkörper so ist, dass die dritte Achse (D) rechtwinklig zu der gemeinsamen Liegeebene ist.

12. Ventileinheit nach einem vorstehenden Anspruch, wobei die Verschlussmittel (3, 4, 5) derart angeordnet sind, dass die Betriebsrichtung (A), gemäß der sich die Verschlussmittel (3, 4, 5) bewegen, parallel zu der ersten Achse (B) ist, insbesondere darauf ausgerichtet ist.

13. Ventileinheit nach einem der Ansprüche 1 bis 11, wobei die Verschlussmittel (3, 4, 5) derart angeordnet sind, dass die Betriebsrichtung (A), gemäß der sich die Verschlussmittel (3, 4, 5) bewegen, quer zu der ersten Achse (B) ist, insbesondere rechtwinklig dazu ist.

14. Ventileinheit nach einem vorstehenden Anspruch und weiter umfassend thermostatische Steuermittel und/oder thermoelektrische Kopfmittel, die betriebsmäßig mit den Verschlussmitteln (3, 4, 5) verbunden sind.

## Revendications

1. Unité de vanne pour un circuit de chauffage, comprenant :
- un corps de vanne (2) logeant un moyen de bouchon (3, 4, 5) pour faire varier le flux d'un fluide thermique,
- ledit moyen de bouchon (3, 4, 5) étant mobile le long d'une direction de fonctionnement (A) et étant configuré pour être entraîné par un moyen de commande thermostatique ou par un moyen de pilotage thermoélectrique ;
- une première portion de raccordement (6) et une deuxième portion de raccordement (9) respectivement raccordées audit corps de vanne (2) pour un raccordement à une première sortie et à une seconde sortie dudit circuit hydraulique pour permettre audit fluide thermique d'entrer et de sortir dudit corps de vanne (2),
- une troisième portion de raccordement (10) apte à permettre un raccordement à, et le passage dudit fluide thermique le long de, un corps de chauffage dudit circuit de chauffage ;
- ladite première portion de raccordement (6) s'étendant le long d'un premier axe (B) se trouvant dans un plan contenant également ladite direction de fonctionnement (A);
comprenant en outre un moyen de couplage mobile (14, 16) au moyen duquel ladite deuxième portion de raccordement (9) est raccordée audit corps de vanne (2), ledit moyen de couplage mobile (14, 16) étant configuré pour permettre à la position relative de ladite deuxième portion de raccordement (9) d'être variée par rapport à ladite première portion de raccordement (6) pour s'adapter à différentes configurations d'installation dans lesquelles ladite première sortie et ladite seconde sortie ont une distance réciproque et une orientation réciproque quelconque, dans laquelle ledit moyen de couplage mobile (14, 16) comprend une première portion de couplage (14) raccordée audit corps de vanne (2) à une position immobile, et une seconde portion de couplage (16) obtenue sur ladite deuxième portion de raccordement (9) et configurée pour se coupler de manière mobile à ladite première portion de couplage (14), dans laquelle ledit moyen de couplage mobile (14, 16) comprend un moyen d'étanchéité (18) interposé entre ladite première portion de couplage (14) et ladite seconde portion de couplage (16) et un moyen de retenue (19) agencé pour empêcher une séparation de ladite seconde portion de couplage (16) de ladite première portion de couplage (14), dans laquelle ladite première portion de couplage comprend une portion de réception (14) définissant une chambre (17) et raccordée, à une position immobile, audit corps de vanne (2), et ladite seconde portion de couplage comprend une portion d'insertion (16) obtenue sur ladite deuxième portion de raccordement (9) et configurée pour être reçue de manière coulissante et rotative dans ladite chambre (17) de ladite portion de réception (14), et dans laquelle, sur la portion de réception (14), dans une surface interne, une zone de dégagement (22) est prévue qui est formée pour recevoir, au repos, le moyen de retenue (19) lorsque la portion d'insertion (16) est dans une configuration de saillie maximale depuis la portion de réception (14).

2. Unité de vanne selon la revendication 1, dans laquelle ladite seconde portion de couplage (16) peut coulisser le long, et peut tourner autour, d'un axe longitudinal (L), transversal audit premier axe (B), de ladite première portion de couplage (14), de manière à permettre à une distance et à une position angulaire de ladite deuxième portion de raccordement (9) d'être ajustées par rapport à ladite première portion de raccordement (6).

3. Unité de vanne selon la revendication 1 ou 2, dans laquelle ledit moyen d'étanchéité comprend un anneau d'étanchéité (18) de type joint torique logé dans un premier siège annulaire (20) obtenu à l'intérieur de ladite portion de réception (14), et ledit moyen de retenue comprend un anneau de retenue (19) du type Seeger logé dans un second siège annulaire (21) obtenu autour d'une extrémité de ladite portion d'insertion (16), ladite zone de dégagement (22) étant formée pour recevoir, de manière à supporter, ledit anneau de retenue (19) dans la configuration de saillie maximale (D3) de ladite deuxième portion de raccordement (9) depuis ladite première portion de raccordement (6).

4. Unité de vanne selon la revendication 3, dans laquelle, sur ladite portion d'insertion (16), une autre zone de dégagement (23) est obtenue qui est formée pour venir en butée contre une surface de repos (24) de ladite portion de réception (14) dans une configuration de distance minimale (D1) de ladite deuxième portion de raccordement (9) par rapport à ladite première portion de raccordement (6).

5. Unité de vanne selon l'une quelconque des revendications précédentes, dans laquelle ladite première portion de raccordement (6) fait saillie intégralement depuis ledit corps de vanne (2), et dans laquelle ladite deuxième portion de raccordement (9) est configurée en forme de coude et comprend une partie d'extrémité (25), pour se raccorder à ladite seconde sortie, s'étendant le long d'un deuxième axe (C) agencé transversalement audit axe longitudinal (L).

6. Unité de vanne selon la revendication 5, dans laquelle ladite partie d'extrémité (25) s'étend en angle droit à ladite seconde portion de couplage (26), ledit moyen de couplage mobile (14, 16) permettant à une distance de centres d'être ajustée entre ladite première portion de raccordement (6) et ladite deuxième portion de raccordement (9).

7. Unité de vanne selon l'une quelconque des revendications précédentes, comprenant en outre un moyen d'équilibrage (26) pour équilibrer le flux dudit fluide thermique dans ledit circuit de chauffage.

8. Unité de vanne selon l'une quelconque des revendications précédentes, comprenant en outre un moyen de vis de dérivation (30) configuré pour permettre à ladite unité de vanne (1) d'être utilisée dans des installations à deux tuyaux comprenant des circuits distincts d'alimentation et de retour.

9. Unité de vanne selon l'une quelconque des revendications précédentes, dans laquelle ladite troisième portion de raccordement (10) est formée pour permettre un raccordement audit corps de chauffage par une sonde (11) et un raccord de tuyau (27), et s'étend le long d'un troisième axe (D) agencé transversalement audit premier axe (B) de ladite première portion de raccordement (6).

10. Unité de vanne selon la revendication 9 telle que dépendante de la revendication 2 ou selon l'une quelconque des revendications 3 à 8 telle que dépendante de la revendication 2, dans laquelle ledit premier axe (B) et ledit axe longitudinal (L) définissent un plan d'emplacement commun, et dans laquelle ladite troisième portion de raccordement (10) est positionnée de telle manière que le raccordement audit corps de chauffage soit tel que ledit troisième axe (D) soit parallèle audit plan d'emplacement commun.

11. Unité de vanne selon la revendication 9 telle que dépendante de la revendication 2 ou selon l'une quelconque des revendications 3 à 8 telle que dépendante de la revendication 2, dans laquelle ledit premier axe (B) et ledit axe longitudinal (L) définissent un plan d'emplacement commun, et dans laquelle ladite troisième portion de raccordement (10) est positionnée de telle manière que le raccordement audit corps de chauffage soit tel que ledit troisième axe (D) soit orthogonal audit plan d'emplacement commun.

12. Unité de vanne selon l'une quelconque des revendications précédentes, dans laquelle ledit moyen de bouchon (3, 4, 5) est agencé de telle manière que ladite direction de fonctionnement (A), selon laquelle ledit moyen de bouchon (3, 4, 5) se déplace, soit parallèle, en particulier alignée, audit premier axe (B).

13. Unité de vanne selon l'une quelconque des revendications 1 à 11, dans laquelle ledit moyen de bouchon (3, 4, 5) est agencé de telle manière que ladite direction de fonctionnement (A), selon laquelle ledit moyen de bouchon (3, 4, 5) se déplace, soit transversale, en particulier orthogonale, audit premier axe (B).

14. Unité de vanne selon l'une quelconque des revendications précédentes, comprenant en outre un moyen de commande thermostatique et/ou un moyen de pilotage thermoélectrique raccordé fonctionnellement audit moyen de bouchon (3, 4, 5).
